# FASCICULE DE BREVET EUROPEEN

(11) **EP 4 161 437 B1**
(45) Date de publication et mention de la délivrance du brevet: **17.04.2024**
(21) Numéro de dépôt: 21730582.0
(22) Date de dépôt: 04.06.2021
(51) Int. Cl.: A61C 9/00, G06T 5/50, G06T 7/33

(54) **PRISE D'EMPREINTE OPTIQUE DE L'ARCADE DENTAIRE D'UN PATIENT**
OPTISCHES ABDRUCKNEHMEN DES ZAHNBOGENS EINES PATIENTEN
TAKING AN OPTICAL IMPRESSION OF A PATIENT'S DENTAL ARCH

(30) Priorité: 06.06.2020 FR 2005929
(43) Date de publication de la demande: 12.04.2023
(73) Titulaire: Querbes, Olivier, 31570 Vallesvilles (FR); Querbes, Véronique, 31570 Vallesvilles (FR)
(72) Inventeur: Querbes, Olivier, 31570 Vallesvilles (FR); Querbes, Véronique, 31570 Vallesvilles (FR)
(74) Mandataire: Bringer IP
(86) Numéro de dépôt international: PCT/EP2021/065068
(87) Numéro de publication internationale: WO 2021/245274

(56) Documents cités:
- WO-A1-2015/181454
- WO-A1-2019/133583
- US-A1- 2018 168 781
- US-A1- 2019 231 492

## Description

### [Domaine technique]

La présente invention se rapporte de manière générale à l'imagerie tridimensionnelle (3D), et notamment aux techniques de prise d'empreinte optique d'une surface bucco-dentaire comme une arcade dentaire d'un patient, c'est-à-dire aux techniques permettant de générer une reconstruction tridimensionnelle d'une arcade dentaire d'un patient.

Les modes de réalisation tirent parti des progrès réalisés dans les architectures d'apprentissage profond telles que les réseaux de neurones profonds et les réseaux de neurones (ou réseaux neuronaux) convolutifs ou réseau de neurones à convolution ou encore CNN (de l'anglais « *Convolutional Neural Networks* ») pour réaliser des applications d'imagerie tridimensionnelle à partir d'images bidimensionnelles (2D) acquises par un dispositif d'acquisition comprenant un ou plusieurs capteurs d'image 2D.

L'invention trouve des utilisations dans diverses applications de l'imagerie bucco-dentaire, par exemple pour la reconstruction dentaire, la création d'implants dentaires, la chirurgie dentaire à visée esthétique, etc. Ces exemples ne sont pas limitatifs.

### [Etat de la technique antérieure]

L'empreinte optique est une technique d'acquisition plus efficace que les empreintes classiques, physico-chimiques, quel que soit le matériau utilisé. Les patients préfèrent la technique d'empreinte numérique plutôt que les techniques conventionnelles, notamment en raison de l'absence de réflexe nauséeux induit. Cette technique est moins invasive car elle ne requiert ni préparation, ni nettoyage ou désinfection, et le risque de contamination infectieuse lié à la réalisation d'une empreinte classique est éliminé. Elle est plus efficace et ergonomique, la présence d'un écran permettant de se passer de la vision directe en bouche pour le praticien. Elle est aussi plus rapide car l'acquisition des données est relativement courte, et il est possible de réitérer de nouvelles captures pendant la séance. L'archivage des empreintes optiques est moins encombrant, et ce type d'empreinte donne au praticien la capacité de stocker indéfiniment les informations capturées. Enfin, un transfert amélioré des images numériques est possible entre le cabinet du praticien dentaire et le laboratoire de fabrication des prothèses, le cas échéant.

D'une manière générale, l'empreinte optique est la première étape d'une chaine numérique dématérialisée (« *digital workflow »* qui, en, anglais, signifie « flux de travail numérique ») allant de l'étape initiale à la pose clinique d'une prothèse dentaire par exemple. Réalisée à l'aide d'une caméra associée à un logiciel, c'est une étape primordiale de la conception et fabrication assistées par ordinateur (CFAO), qui permet de limiter les imprécisions des prothèses dentaires. Pour la prise d'empreinte, on utilise une caméra associée à un logiciel, capables de produire plusieurs milliers d'images 3D par seconde.

Bien qu'il existe de nombreuses méthodes d'enregistrement, aujourd'hui la CFAO utilise principalement la méthode directe par triangulation en lumière structurée, d'une part, et la méthode indirecte en lumière structurée active et/ou focalisée, d'autre part.

Le principe de la triangulation en lumière structurée consiste à placer un émetteur de lumière et un récepteur (*i.e*., une caméra), de telle sorte que l'objet à enregistrer (par exemple une dent) se trouve au sommet du triangle formé par l'émetteur, le récepteur et la dent. La caméra réceptrice mesure la projection d'un point lumineux sur la dent. Afin d'obtenir une meilleure précision, et pour une acquisition plus rapide et de meilleure qualité, une frange de lumières parallèles est projetée (et pas uniquement un rayon lumineux). L'objet renvoie les rayons lumineux réfléchis au récepteur. Cette méthode d'enregistrement présente toutefois des inconvénients pratiques liés au positionnement en bouche de l'émetteur et du récepteur.

La méthode indirecte en lumière active ou structurée consiste à projeter un réseau périodique sur l'objet, et à l'observer à travers un deuxième réseau. Elle ressemble à la méthode par triangulation, mais en diffère d'un point de vue mathématique. En effet, l'information est perçue grâce à l'interférence de deux réseaux ondulatoires ou macroscopiques qui sont projetés et observés, respectivement, sur l'objet.

En outre, l'acquisition optique des volumes bucco-dentaires comme des arcades dentaires peut se faire à l'aide d'un scanner intraoral ou IOS (de l'anglais « *intraoral scanner »*). Plus particulièrement, l'acquisition peut se faire de deux façons : soit image par image, soit par un flux numérique continu d'images. Dans les deux cas, un mécanisme de reconstruction 3D permet de reconstruire la surface 3D de l'arcade à partir des images 2D acquises par l'IOS.

Dans le premier cas (procédé image par image), l'enregistrement se fait par une succession de prises d'images rapprochées. Le logiciel effectue alors la mise bout à bout des images grâce à des parties communes qui existent entre celles-ci. Les images qui ne sont pas exploitables sont rejetées en temps réel. En fin d'acquisition, le logiciel indique les zones de manque pour permettre au praticien de reprendre son empreinte au niveau de ce manque. Le praticien place la caméra au-dessus de la zone à enregistrer et c'est à l'aide d'un signal sonore ou visuel que la prise du cliché est indiquée. Durant l'enregistrement, la caméra doit être très stable. Il existe pour cela des dispositifs de stabilisation qui sont d'une grande utilité notamment pour les praticiens peu expérimentés. Cette prise de vue est plutôt adaptée aux empreintes sectorielles, c'est-à-dire qui se rapportent à une portion limitée seulement de l'arcade dentaire, car elles font intervenir peu de clichés par rapport aux empreintes étendues, c'est-à-dire qui se rapportent à la totalité de l'arcade dentaire ou à une partie substantielle de celle-ci.

Le cas du flux continu ou le flux vidéo, quant à lui, permet d'enregistrer les volumes bucco-dentaires en survolant les surfaces. Un grand nombre d'images peut être enregistré. Le flux continu peut être utilisé pour des empreintes étendues comme des arcades dentaires complètes. Lors de l'acquisition, le logiciel montre directement au praticien, en temps réel, un retour vidéo permettant de visualiser la position de la caméra et la construction du modèle virtuel en cours. Si une zone de manque apparait, il suffit au praticien de revenir sur cette dernière afin de pallier au trou noir. Cette prise de vue permet une liberté de mouvement, mais un trajet (« *scan path* », qui signifie « chemin de scannage » en anglais) rigoureux doit être respecté.

Cependant, utiliser une lOS n'est pas forcément aisé, notamment parce que le mouvement du praticien est contraint par le « tracking », *i.e.,* le chemin de scannage. Le respect de ce chemin est une nécessité pour avoir une arcade cohérente. Il implique que le mouvement doit suivre un trajet continu et ininterrompu. Par exemple, si on part de la molaire du fond à droite, on ne peut pas aller enregistrer la molaire du fond à gauche d'un saut. Il faut au contraire la rejoindre par un chemin continu, *i.e.* balader la caméra tout le long de l'arcade et de façon non discontinue : prémolaires droites, puis canine droite, incisives, canine gauche, prémolaires gauches et enfin molaires gauches. C'est le principal défaut d'une acquisition par un IOS. Les praticiens doivent s'entrainer à faire des chemins continus. Si le mouvement fait une embardée sur le côté, ou va trop vite, le praticien perd le « *tracking* » et doit revenir en arrière pour retrouver une zone de l'arcade déjà reconstruite, attendre que la caméra la reconnaisse, puis repartir de là dans le sens initial.

Il existe, outre les IOS, d'autres dispositifs de prise d'images bidimensionnelles, qui pourraient avantageusement être mis à profit pour se combiner aux IOS.

Parmi ces dispositifs, on peut compter les téléphones portables, les tablettes, les lunettes de réalité augmentée et les appareils photo numériques. Ces dispositifs, bien que moins précis que les IOS, possèdent l'avantage d'un champ de vue large, qui englobe souvent à lui seul le champ d'une arcade dentaire. Certes, ils ne sont pas directement adaptés à reconstruire du tissu dentaire du fait de sa spécularité et son manque de texture. Il sera présenté un algorithme qui permet de transformer chacune de leur image bidimensionnelle en une reconstruction tridimensionnelle grossière mais dense (*i.e.,* avec un grand nombre de points 3D).

L'invention part de l'observation que, en combinant le champ large d'un dispositif de ce genre, que nous appellerons dispositif global par la suite, avec la précision d'un IOS, que nous appellerons dispositif local par la suite, le processus clinique d'acquisition d'une empreinte dentaire étendue pourrait être allégé.

Le document US2013330684 divulgue un système comprenant une caméra intraorale, ainsi qu'un ensemble d'autres capteurs / émetteurs dans le corps de la caméra, et/ou dans une annexe matérielle à laquelle la caméra peut se fixer. Parmi ces autres capteurs, une caméra 2D est prévue pour prendre des photos du visage du patient, et éventuellement en faire une reconstruction 3D. Un recalage 3D est possible entre le modèle 3D de l'arcade dentaire du patient reconstruit par la caméra intraorale et le modèle 3D du visage obtenu à partir des photos prises par la caméra 2D.

Le document US2008305458A divulgue une méthode qui comprend la génération d'une image intrabuccale tridimensionnelle de la couronne d'une dent ou des couronnes d'une pluralité de dents sélectionnées, la génération d'une image tridimensionnelle de la racine de la dent ou des racines correspondantes des dents sélectionnées correspondantes, et la composition des images tridimensionnelles de la couronne(s) et de la racine(s) de la dent pour produire une image composite. L'image des racines de la dent est produite par imagerie aux rayons X ou par imagerie par résonance magnétique (IRM).

US2018/168781 décrit un système de réalité augmenté pour des praticiens dentaires. Le système comprend un scanner, un affichage de réalité augmentée et un scanner. Un objectif du système est notamment l'affichage en réalité augmentée d'informations sur une vue en temps réel de prise par le praticien. D1 décrit l'affichage d'une image 2D sur une reconstruction 3D déjà établie.

Enfin, le document FR3032282A1 divulgue la génération, par des lunettes de réalité augmentée, d'une reconstruction 3D à partir de deux images ou plus. Cette reconstruction 3D peut être précisée localement par des informations fournies par un scanner intraoral (IOS) plus précis, avec fusion de la reconstruction 3D et de ces informations par recalage 3D.

### [Exposé de l'invention]

L'invention propose un procédé et un dispositif capables de pallier les inconvénients de l'art antérieur précité qui résultent de la nécessité d'assurer le *« tracking* » lors de la prise d'une empreinte étendue de l'arcade dentaire d'un patient, c'est-à-dire la génération d'une reconstruction tridimensionnelle de l'arcade dentaire d'un patient.

L'invention adresse en effet ces inconvénients en proposant une solution au problème du « *tracking* », avec un premier aspect de l'invention qui se rapporte à un procédé de génération d'une reconstruction tridimensionnelle d'une arcade dentaire d'un patient, dite empreinte optique étendue, comprenant les étapes suivantes mises en oeuvre sous la commande d'un praticien :
- l'obtention d'au moins une image bidimensionnelle globale de l'arcade dentaire acquise avec un premier capteur d'image ayant un champ de vue relativement large et une précision relativement faible, et la génération par des premiers moyens de traitement de données numériques d'une reconstruction tridimensionnelle globale, relativement grossière, de l'arcade dentaire à partir de ladite image bidimensionnelle ;
- l'acquisition d'une pluralité d'images bidimensionnelles locales de secteurs associés respectifs de l'arcade dentaire avec un second capteur d'image ayant un champ de vue relativement plus restreint et une précision relativement plus élevée que le premier capteur d'images, et la génération par des deuxièmes moyens de traitement de données numériques de reconstructions tridimensionnelles locales respectives, relativement plus précises que la reconstruction tridimensionnelle globale, desdits secteurs associés de l'arcade dentaire ;
- la fusion, par un algorithme de fusion mis en oeuvre par des troisièmes moyens de traitement de données numériques, de la reconstruction tridimensionnelle globale et des reconstructions tridimensionnelles locales en une seule et même reconstruction tridimensionnelle totale dans laquelle les reconstructions tridimensionnelles locales sont respectivement substituées à des portions de la reconstruction tridimensionnelle globale qui correspondent aux secteurs associés de l'arcade dentaire, la reconstruction globale jouant un rôle de guide spatial absolu, ladite fusion comprenant un calage des reconstructions tridimensionnelles locales dans la reconstruction tridimensionnelle globale, ledit calage étant adapté pour minimiser une distance entre les nuages de points correspondant à chacun des secteurs associés de l'arcade dentaire et du nuage de points correspondants de la reconstruction tridimensionnelle globale.

En combinant le champ large du premier capteur d'image (qui peut être un smartphone ou similaire, et qui sera appelé appareil ou dispositif global dans la suite), avec la précision du second capteur d'image (qui peut être un IOS ou similaire, et qui sera appelé appareil ou dispositif local dans la suite), le processus clinique de prise d'une empreinte optique étendue d'une arcade dentaire d'un patient est amélioré et simplifié. En effet, le praticien peut, grâce à l'appareil global, prendre en une seule image une reconstruction globale tridimensionnelle, puis venir avec l'IOS ne reconstruire que les zones (ou secteurs) de l'arcade dentaire nécessitant une précision plus fine, produisant une ou plusieurs reconstructions locales précises. Un algorithme annexe est chargé de la fusion de la reconstruction globale avec chacune des reconstructions locales, afin de produire une seule reconstruction tridimensionnelle mixte qui correspond à l'empreinte optique recherchée.

Si le praticien souhaite reconstruire avec précisions des zones locales disjointes, c'est-à-dire sans aucun recouvrement entre elles, le processus de fusion le lui permet : en effet, la reconstruction globale joue le rôle de guide spatial absolu pour la pose respective de chacune des reconstructions locales, lesquelles sont retrouvées dans le reconstruction globale par recalage dans le même référentiel spatial.

D'autre part, la problématique de la perte de « *tracking* » est résolu : en effet, si l'on part du principe que, selon des modes de mise en oeuvre de l'invention qui seront explicités, chaque image issue de l'IOS peut produire une reconstruction 3D dense, alors chacune de ces images peut mener à une reconstruction locale, qui peut être recalée sur la reconstruction globale, et qui vient alors s'ajouter à toutes les autres reconstructions locales précédemment effectuées mais sans la nécessité d'un recouvrement entre les zones correspondantes de l'arcade dentaire pour assurer une continuité, et sans la nécessité de suivre un chemin de traçage imposé. Selon les modes de mise en oeuvre de l'invention, la continuité de l'empreinte est assurée par la reconstruction globale sous-jacente, quelle que soit la relation, et même en l'absence de relation, entre les reconstructions locales de secteurs de l'arcade dentaire respectivement associés à ces reconstructions locales.

L'homme du métier appréciera que les reconstructions globales et locales n'ont pas non plus la nécessité d'être effectuées en même temps, ni en un même lieu. Ainsi, la reconstruction globale peut être générée par le patient lui-même via un appareil global comme son smartphone, et être transmise à distance (par email, ou par réseau cellulaire 3G-LTE, 4G ou 5G, etc.) à son praticien pour un premier avis (diagnostique clinique, esthétique, etc.). Si besoin, le praticien peut alors proposer à son patient un rendez-vous en Cabinet afin de compléter la reconstruction globale grâce à un autre appareil local.

On rappelle que, dans le contexte des techniques de l'apprentissage profond utilisées dans le domaine de l'intelligence artificielle (ou lA, de l'anglais « *Artificial Intelligence* »), des modèles algorithmiques d'apprentissage supervisé nécessitent des connaissances spécifiques quant au problème étudié, alors que des modèles algorithmiques d'apprentissage non supervisé n'en nécessitent pas. L'apprentissage du réseau neuronal convolutif selon les modes de réalisation de l'invention est dit « semi-supervisé » en ce sens que le CNN est conçu et formé pour une application particulière.

Avantageusement, par ailleurs, l'invention peut mettre en oeuvre de la stéréoscopie multi-vues afin de générer des reconstructions 3D globales ou locales plus précises à partir, chacun, d'une pluralité d'images 2D du même objet prises sous des angles de vues respectifs différents par un dispositif d'acquisition d'image binoculaire. Mais elle peut aussi s'en affranchir en fonctionnant le cas échéant avec un unique capteur d'image 2D, c'est-à-dire avec un dispositif d'acquisition d'image 2D (ou imageur 2D) qui est monoculaire et qui est utilisé pour acquérir une unique image 2D pour chaque reconstruction 3D à générer.

Le procédé selon le premier aspect de l'invention peut comprendre, en outre, les caractéristiques suivantes prises isolément ou en combinaison :
- le premier capteur d'image peut être un capteur d'image d'un appareil numérique portable du patient, comme un téléphone portable, et l'image bidimensionnelle globale peut être acquise par le patient lui-même à l'aide de son appareil numérique portable et être transmise depuis ledit appareil numérique portable au praticien pour la génération de la reconstruction tridimensionnelle globale ;
- le procédé peut comprendre l'acquisition de l'image bidimensionnelle globale par le praticien à l'aide du premier capteur d'image ;
- le premier capteur d'image peut être compris dans des lunettes de réalité augmentée comprenant en outre les premiers moyens de traitement numériques pour la génération de la reconstruction tridimensionnelle globale ;
- le second capteur d'image peut être un scanner intraoral, comprenant les seconds moyens de traitement de données numériques pour la génération des reconstructions tridimensionnelles locales ;
- la reconstruction tridimensionnelle globale et/ou les reconstructions tridimensionnelles locales peuvent être effectuées en générant pour chacune une carte de profondeur à partir d'une seule image 2D acquise par le premier capteur ou par le second capteur d'image, respectivement, sur la base d'une architecture d'apprentissage profond préalablement entraînée à cet effet.

En outre, un deuxième aspect de l'invention concerne un programme informatique comprenant des instructions qui, lorsque le programme informatique est chargé dans la mémoire d'un ordinateur et est exécuté par un processeur dudit ordinateur, causent la mise en oeuvre par l'ordinateur de toutes les étapes de la phase de prédiction du procédé selon le premier aspect.

Un troisième aspect de l'invention est relatif à un dispositif de génération d'une reconstruction tridimensionnelle d'une arcade dentaire d'un patient, dite empreinte optique étendue, comprenant :
- un premier capteur d'image ayant un champ de vue relativement large et une précision relativement faible pour acquérir au moins une image bidimensionnelle globale de l'arcade dentaire, et des premiers moyens de traitement de données numériques pour générer une reconstruction tridimensionnelle globale, relativement grossière, de l'arcade dentaire à partir de ladite image bidimensionnelle ;
- un second capteur d'image ayant un champ de vue relativement plus restreint et une précision relativement plus élevée que le premier capteur d'images, pour acquérir une pluralité d'images bidimensionnelles locales de secteurs associés respectifs de l'arcade dentaire, et des deuxièmes moyens de traitement de données numériques pour générer des reconstructions tridimensionnelles locales respectives, relativement plus précises que la reconstruction tridimensionnelle globale, desdits secteurs associés de l'arcade dentaire ; ainsi que,
- des troisièmes moyens de traitement de données numériques configurés pour mettre en oeuvre un algorithme de fusion adapté pour fusionner la reconstruction tridimensionnelle globale et des reconstructions tridimensionnelles locales en une seule et même reconstruction tridimensionnelle totale dans laquelle les reconstructions tridimensionnelles locales sont respectivement substituées à des portions de la reconstruction tridimensionnelle globale qui correspondent aux secteurs associés de l'arcade dentaire, la reconstruction globale jouant un rôle de guide spatial absolu, l'algorithme de fusion comprenant un calage des reconstructions tridimensionnelles locales dans la reconstruction tridimensionnelle globale, ledit calage étant adapté pour minimiser une distance entre les nuages de points correspondant à chacun des secteurs associés de l'arcade dentaire et le nuage de points correspondants de la reconstruction tridimensionnelle globale.

Le dispositif selon le troisième aspect de l'invention peut comprendre, en outre, les caractéristiques suivantes prises isolément ou en combinaison :
- le dispositif peut comprendre des lunettes de réalité augmentée qui comprennent le premier capteur d'image et, en outre, les premiers moyens de traitement numériques pour la génération de la reconstruction tridimensionnelle globale ;
- le dispositif peut comprendre un scanner intraoral qui comprend le second capteur d'image et, en outre, les seconds moyens de traitement de données numériques pour la génération des reconstructions tridimensionnelles locales
- les premiers moyens de traitement numériques et/ou les seconds moyens de traitement numériques peuvent être configurés pour générer la reconstruction tridimensionnelle globale et les reconstructions tridimensionnelles locales, respectivement, en générant pour chacune une carte de profondeur à partir d'une seule image 2D acquise par le premier capteur ou par le second capteur d'image, respectivement, sur la base d'une architecture d'apprentissage profond préalablement entraînée à cet effet.

Enfin, un quatrième et dernier aspect de l'invention concerne un appareil de prise d'empreinte optique comprenant un ordinateur qui comprend les troisièmes moyens de traitement de données numériques du dispositif selon le troisième aspect ci-dessus, ainsi que des moyens adaptés pour la mise en oeuvre du procédé selon le premier aspect.

### [Description des dessins]

D'autres caractéristiques et avantages de l'invention apparaîtront encore à la lecture de la description qui va suivre. Celle-ci est purement illustrative et doit être lue en regard des dessins annexés, dans lesquels :
- [Fig. 1]: La figure 1 est une représentation du visage d'un patient humain dont l'arcade dentaire peut faire l'objet d'une prise d'empreinte optique 3D grâce au procédé selon l'invention ;
- [Fig. 2]: La figure 2 est une image 2D d'une image 2D de l'arcade dentaire globale du patient de la figure 1, obtenue avec un appareil d'acquisition d'image à champ large et faible précision ;
- [Fig. 3]: La figure 3 est une empreinte optique 3D peu précise obtenue par reconstruction tridimensionnelle à partir de l'image 2D de la figure 2, selon des modes de mise en oeuvre de l'invention ;
- [Fig. 4]: La figure 4 est une série d'images 3D correspondant à des reconstructions 3D locales précises de secteurs déterminés de l'arcade dentaire du patient de la figure 1, générées à partir d'une pluralité d'image 2D associées respectives, prises chacune par un appareil d'acquisition d'image à champ étroit et grande précision ;
- [Fig. 5]: La figure 5 est une empreinte optique 3D obtenue par la mise en oeuvre du procédé selon l'invention, par recalage et fusion des reconstructions 3D locales précises de la figure 4 avec la reconstruction 3D globale peu précise de la figure 3 ;
- [Fig. 6]: La figure 6 est un diagramme fonctionnel illustrant la mise en oeuvre du procédé selon le premier aspect de l'invention, par les moyens d'un dispositif de prise d'empreinte optique selon le troisième aspect de l'invention ;
- [Fig. 7]: La figure 7 est un diagramme fonctionnel illustrant l'apprentissage d'un des CNN qui sont utilisés par le procédé de la figure 6 ; et,
- [Fig. 8]: La figure 8 est un diagramme fonctionnel illustrant une architecture de CNN pouvant être utilisée dans des modes de réalisation de l'invention.

### [Description des modes de réalisation]

Dans la description de modes de réalisation qui va suivre et dans les Figures des dessins annexés, les mêmes éléments ou des éléments similaires portent les mêmes références numériques aux dessins. À moins que ceci apporte un complément d'information utile à la clarté de l'exposé dans son ensemble, des éléments apparaissant plusieurs fois sur des figures différentes auxquelles il sera fait référence successivement, ne seront pas décrits à chaque fois en détail, afin de ne pas alourdir inutilement la description.

Des modes de mise en oeuvre de l'invention vont être décrits dans le contexte non limitatif de l'acquisition d'une empreinte dentaire optique étendue, par un praticien dentiste, par exemple.

Avant d'entamer la description de modes de réalisation détaillés, il apparaît utile, en outre, de préciser la définition de certaines expressions ou de certains termes qui y seront employées. A moins qu'il n'en soit disposé autrement, ces définitions s'appliquent nonobstant d'autres définitions que l'homme du métier peut trouver dans certains ouvrages de la littérature spécialisée.

Par « arcade dentaire d'un patient », on entend l'ensemble des 32 dents formant la dentition d'un être humain, c'est-à-dire l'ensemble des tissus dentaires statiques incluant la gencive, les dents, et du matériel prothétique éventuel (couronnes, bagues, « scan bodies », « inlay-core », « inlay-onlay », etc). Le cas échéant, selon le contexte, on distinguera parfois entre l'arcade supérieure qui correspond à la moitié des dents qui sont implantées sur la mâchoire supérieure de l'individu, d'une part, et l'arcade inférieure qui correspond à l'autre moitié des dents qui sont implantées sur la mâchoire inférieure dudit individu, d'autre part.

Par empreinte dentaire « optique » d'un patient, on entend une empreinte de la dentition du patient sous la forme d'une image, en l'occurrence une image tridimensionnelle (3D), par opposition à une empreinte physique classique obtenue par moulage des arcades dentaires supérieure et inférieure. En outre, une empreinte optique « étendue » d'une arcade dentaire est une représentation sous forme d'une image 3D de la totalité de l'arcade, ou d'une partie substantielle de l'arcade, *i.e.,* d'une partie de l'arcade correspondant à au moins une hémi-arcade, c'est-à-dire la demi-arcade vue du côté gauche ou du côté droit du patient. Une telle arcade étendue s'oppose à une empreinte d'un secteur seulement desdites arcades, limité à une dent ou quelques dents seulement.

Une « image », ou « vue », ou encore « balayage » (« scan » en anglais), est constituée d'un ensemble de points de la scène tridimensionnelle réelle. Pour une image 2D acquise par un dispositif d'acquisition d'image, ou dispositif imageur (par exemple un capteur CCD ou un capteur CMOS), les points concernés sont les points de la scène réelle projetés dans le plan de la focale du capteur 2D servant à acquérir l'image 2D, et sont définis par les pixels de l'image 2D. Pour une image 3D reconstruite (aussi appelée « reconstruction 3D », ce terme désigne le produit ou résultat du traitement de reconstruction 3D), les points concernés étant un nuage de points 3D obtenu par une transformation d'une « carte de profondeur » (voir définition donnée plus bas). Un tel nuage de points définit un squelette de la scène tridimensionnelle. Et un maillage 3D de ce nuage de points, par exemple un maillage de points 3D triangulés, peut en définir une enveloppe.

Un « *n*-uplet » d'images, où *n* est un nombre entier supérieur ou égal à l'unité, est un ensemble de *n* images prises simultanément par le ou les capteurs d'un dispositif d'acquisition d'images (ou dispositif d'imagerie). En général, le dispositif d'imagerie possède deux capteurs, permettant de générer un doublet (i.e., un 2-uplet) d'images de la même scène respectivement acquises simultanément par chacun de ces deux capteurs. Mais il peut posséder trois, quatre, cinq, etc. capteurs permettant d'acquérir un triplet *(i.e.,* un 3-uplet), un quadruplet *(i.e.,* un 4-uplet), un quintuplet *(i.e.,* un 5-uplet), etc. d'images de la même scène respectivement acquises simultanément par chacun desdits capteurs. Toutefois, le dispositif peut également ne comprendre qu'un unique capteur associé à un arrangement optique à base de miroir(s) et éventuellement de prisme(s), permettant d'acquérir successivement plusieurs images de la même scène vues sous des angles différents.

Un dispositif d'imagerie « monoculaire » est un dispositif d'acquisition ne comprenant qu'un unique capteur d'image.

Le « recalage » (en anglais *« registration* ») consiste à déterminer la relation spatiale entre deux représentations (image 2D ou surface 3D) d'un même objet de sorte à faire se superposer les représentations d'un même point physique.

Le « calcul de pose » est l'estimation de la position et de l'orientation de la scène imagée par rapport à l'imageur (capteur d'image). C'est un des problèmes fondamentaux en vision par ordinateur, souvent nommé « *Perspective-n-Points »* (PnP). Ce problème consiste à estimer la pose (2-uplet [*Rⱼ,* ; *tⱼ*] formé de la matrice de rotation *R*ⱼ et du vecteur de translation *tⱼ*) de la caméra par rapport à un objet dans la scène, ce qui revient à trouver la pose permettant de réduire l'erreur de reprojection entre un point de l'espace et son correspondant 2D dans l'image. Une approche plus récente, nommée ePNP (de l'anglais « *Efficient Perspective-n-Point* »), suppose que la caméra est calibrée, et prend le parti de s'affranchir des problèmes de calibration en normalisant les points 2D en les multipliant par l'inverse de la matrice intrinsèque. Cette approche rajoute à cela le fait de paramétrer la pose de la caméra en passant par 4 points de contrôle, assurant que la transformation estimée soit rigide. Le fait de procéder ainsi permet de rendre les temps de calcul moins longs.

Une « carte de profondeur » (« *Depth map »* en anglais) associé à une image 2D, est une forme de représentation en 2D de l'information 3D reconstruite, correspondant à la portion de la scène 3D se reprojetant dans l'image 2D. En pratique, il s'agit d'un ensemble de valeurs, codées sous la forme de niveaux (ou nuances) de gris, respectivement associées à chaque pixel *pᵢ* de l'image 2D : plus la distance entre le point de la scène tridimensionnelle et le plan de l'image 2D est importante, et plus le pixel est sombre.

Un « réseau de neurones (ou neuronal) convolutif » ou « réseau de neurones (ou neuronal) à convolution » ou encore CNN (de l'anglais « *Convolutional Neural Networks* »), est un type de réseau de neurones artificiels acycliques (« *feed-forward* »), consistant en un empilage multicouche de perceptrons, dont le but est de prétraiter de petites quantités d'information. Un CNN se compose de deux types de neurones artificiels, agencés en « strates » ou « couches » traitant successivement l'information :
- les neurones de traitement, qui traitent une portion limitée de l'image (appelée « champ réceptif ») au travers d'une fonction de convolution ; et,
- les neurones de mise en commun (totale ou partielle) des sorties, dits neurones de « *pooling* » (qui signifie « regroupement » ou « mise en commun », en anglais), qui permettent de compresser l'information en réduisant la taille de l'image intermédiaire (souvent par sous-échantillonnage).

L'ensemble des sorties d'une couche de traitement permet de reconstituer une image intermédiaire, qui sert de base à la couche suivante. Un traitement correctif non-linéaire et ponctuel peut être appliqué entre chaque couche pour améliorer la pertinence du résultat. Les CNN connaissent actuellement de larges applications dans le domaine de la reconnaissance d'image.

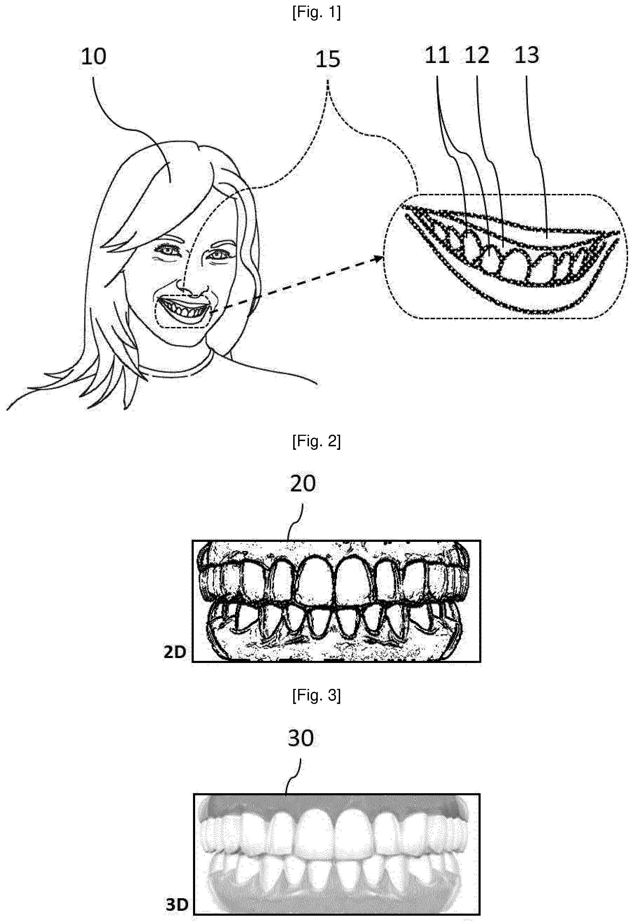

La **figure 1** montre le visage d'un patient, plus particulièrement une jeune femme 10 en train de sourire. Comme le montre le détail 15 de la figure, qui correspond à la zone de la bouche du patient, la bouche s'ouvre lorsque le patient sourit. Ceci révèle une partie au moins de sa dentition. La zone de la bouche comprend des dents, en l'occurrence l'arcade dentaire supérieure 11, de la gencive 12, la lèvre supérieure 13 et la lèvre inférieure 14. Plus généralement, une arcade dentaire du patient 10 (ou les deux arcades, supérieur et inférieure) est(sont) visible(s) lorsque le patient ouvre la bouche. Cette arcade dentaire peut faire l'objet d'une prise d'empreinte optique 3D grâce au procédé selon l'invention.

La **figure 2** montre une image 2D de l'arcade dentaire entière du patient de la figure 1 (arcade supérieur et arcade inférieur comprises), obtenue avec un appareil d'acquisition d'image à champ large et faible précision (ou « appareil global » dans le contexte de la présente description).

La **figure 3** est une empreinte optique 3D peu précise obtenue par reconstruction tridimensionnelle à partir de l'image 2D de la figure 2, selon des modes de mise en oeuvre de l'invention qui seront décrits plus loin.

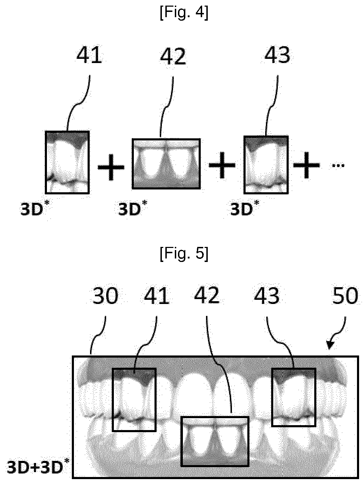

La **figure 4** est une série de surfaces 3D correspondant à des reconstructions 3D locales précises de secteurs déterminés de l'arcade dentaire du patient de la figure 1, générées à partir d'une pluralité d'image 2D associées respectives, prises chacune par un appareil d'acquisition d'image, dit appareil local, ayant un champ relativement plus étroit mais qui est relativement plus précis que l'appareil global ayant servi à l'acquisition de l'image 2D de la figure 2. Par exemple, la reconstruction 41 correspond au secteur de la canine supérieur droite du patient ; la reconstruction 42 correspond au secteur de la canine supérieur gauche du patient ; et la reconstruction 42 correspond au secteur des deux incisives inférieures du patient.

Enfin, la **figure 5** montre une empreinte optique 3D étendue de l'arcade du patient, qu'on appelle aussi reconstruction 3D précisée 50, qui a été obtenue par la mise en oeuvre du procédé selon l'invention. Plus particulièrement, l'amélioration de la précision de la reconstruction 3D précisée 50 par rapport à la reconstruction 3D globale 30, provient du recalage et de la fusion des reconstructions 3D locales précises 41, 42 et 43 de la figure 4 avec la reconstruction 3D globale peu précise 30 de la figure 3. Dans la reconstruction 3D précisée de la figure 5, les reconstructions 3D locales 41, 42 et 43 ont été substituées aux parties correspondantes de la reconstruction 3D globale 30 de la figure 3. Dans l'exemple, les reconstructions 3D locales 41 et 42 sont posées sur l'arcade supérieure, en place au niveau de la canine supérieure droite et au niveau de la canine supérieur gauche, respectivement, alors que la reconstruction 3D locale 43 est posée sur l'arcade inférieure, en place au niveau des deux incisives inférieures.

L'homme du métier appréciera que, si on acquiert des images 2D à partir desquelles on génère des reconstructions 3D locales correspondant chacune à une portion déterminée de l'arcade dentaire du patient en sorte que, ensemble, lesdites reconstruction 3D locales couvrent la totalité de ladite arcade, alors leur fusion avec la reconstruction 3D globale 30 de la figure 3 permet de générer une reconstruction 3D étendue de l'arcade (c'est-à-dire une reconstruction 3D couvrant une partie substantielle de l'arcade, par exemple une hémi-arcade voire la totalité de l'arcade) et possiblement, bien entendu, à la fois de l'arcade supérieure et de l'arcade inférieure, qui présente la même précision que les reconstructions locales. Et pourtant les reconstructions 3D locales comme les reconstructions 41, 42 et 43 de la figure 4 peuvent avoir été acquises sans ordre particulier, et sans recouvrement partiel entre elles, *i.e.,* en réalité sans aucune relation particulière entre elles si ce n'est qu'elles sont, évidemment, toutes basées sur des images 2D de l'arcade dentaire du même patient que l'on cherche à reconstruire en 3D avec la meilleure précision possible. Dit autrement, leur acquisition avec un appareil local comme un IOS n'a pas besoin de respecter les contraintes sévères qui sont liées à la nécessité de respecter un chemin de *« tracking* », qui ont été mentionnées en introduction de la présente description.

La reconstruction 3D précisée 50 de la figure 5 peut être affichée sur un écran, dans des lunettes de réalité virtuelles ou dans des lunettes de réalité augmentée ; elle peut aussi être stockée dans une mémoire de masse ou sur tout autre support de stockage approprié ; elle peut également être imprimée en 3D, etc., selon les besoins de l'application.

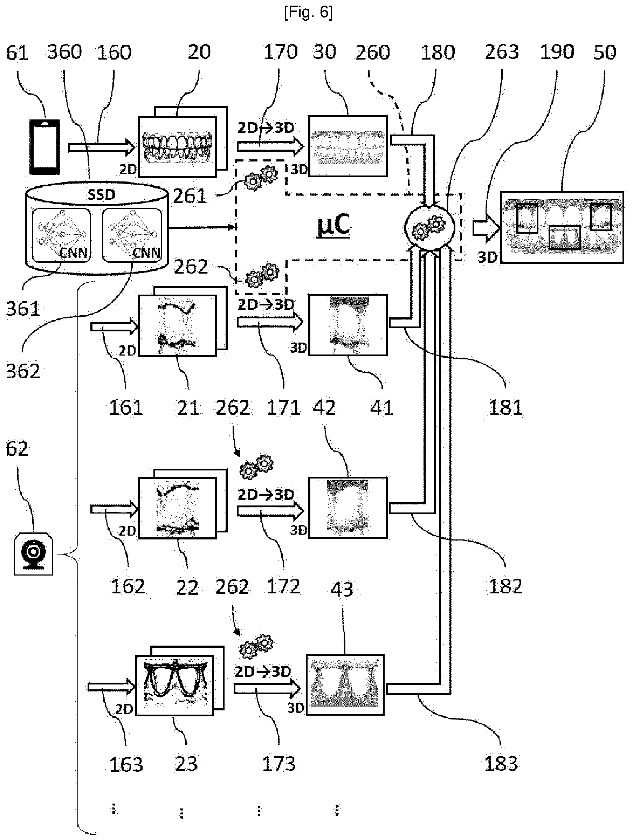

En référence au diagramme fonctionnel de la **figure 6****,** on va maintenant décrire à la fois un exemple de mise en oeuvre du procédé selon le premier aspect de l'invention et les moyens fonctionnels d'un système de prise d'empreinte optique selon le troisième aspect de l'invention. Sur la figure, les étapes du procédé sont représentées par des flèches épaisses. Les autres éléments représentés, hormis les images 2D et hormis les surfaces 3D correspondant aux reconstructions 3D obtenues à partir desdites images 2D, sont des moyens du système de prise d'empreinte. On va commencer par présenter ces derniers.

Le système de prise d'empreinte comprend un premier appareil 61 de capture d'image (ou appareil d'acquisition d'image, ou encore imageur) appelé appareil global dans la présente description. Par construction, cet appareil global 61 possède un champ de vision relativement large mais une précision relativement faible. Il peut s'agir d'un appareil photo ou d'une caméra, qui peut être intégré(e) dans un dispositif portable personnel du patient ou du praticien. Ce genre de dispositif portable comprend, sans que la liste soit exhaustive : un téléphone portable, une tablette numérique, des lunettes de réalité augmentée, une caméra intraorale bidimensionnelle, un appareil photographique, etc. Nous nous référerons par la suite à ce genre d'appareil par l'expression « appareil global » car il permet d'obtenir une vue globale de l'arcade.

Dans un mode de réalisation, l'appareil global 61 est utilisé en mode vidéo, acquérant des séquences temporelles d'images 2D. Avec ce mode de fonctionnement, un algorithme de type SLAM (de l'anglais « *Simultaneous Localization And Mapping* ») peut être appliqué de manière séquentielle sur la suite (ou série) d'images, de manière à produire une reconstruction 3D incrémentale au fur et à mesure de l'arrivée de nouvelles images.

Dans un autre mode de réalisation, l'appareil global 61 est utilisé en mode photo, acquérant qu'une seule image à la fois. Pour produire une reconstruction 3D dense à partir de cette seule image acquise, il est possible de faire appel à la prédiction de carte de profondeur par image unique via le réseau d'apprentissage profond 361. Pour plus de détails sur ce procédé, l'homme du métier peut se référer, par exemple, à l'article par Laina et al "Deeper Depth Prediction with Fully Convolutional Residual Networks", IEEE International Conférence on 3D Vision (3DV), 2016.

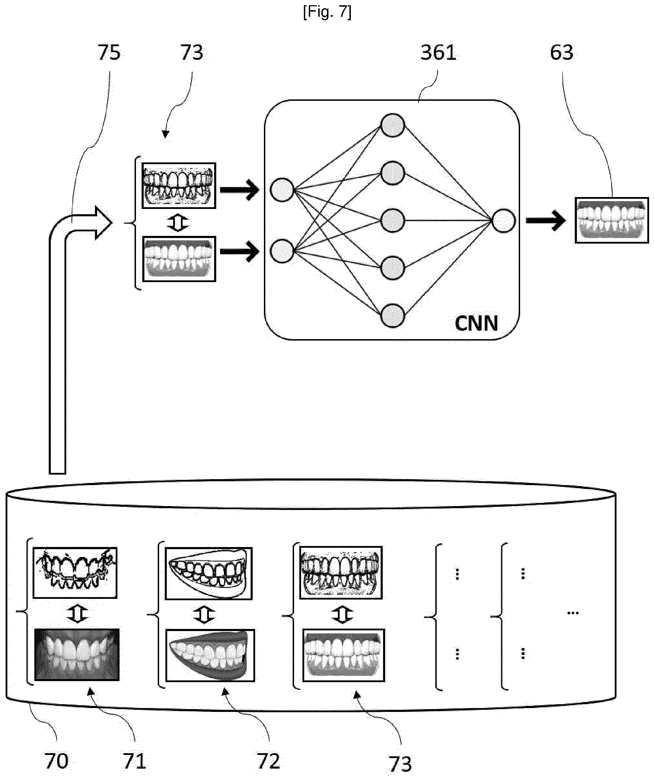

Pour entraîner ce genre de réseau d'apprentissage, il est nécessaire de disposer d'une base de données d'apprentissage comportant des couples {image 2D ; carte de profondeur associée}. Un procédé permettant de générer une telle base de données sera décrit plus loin, en référence du schéma fonctionnel à la **figure 7****.**

Comme montré à la figure 6, le système pour la mise en oeuvre du procédé, comprend en outre un second appareil 62 de capture d'image, appelé appareil local dans la présente description. Cet appareil local 62 possède, lui aussi par construction, un champ de vision relativement plus étroit mais une précision relativement plus grande, que le champ de vision et la précision, respectivement, de l'appareil global 61. Il peut s'agir d'une caméra intraorale destinée à la reconstruction 3D de surfaces intraorales à partir d'images 2D passives, par exemple un scanner intraoral (IOS).

Une telle caméra intraorale 62 est adaptée pour, et destinée à la reconstruction 3D de surfaces intraorales à partir d'images 2D passives, fournis par un ou plusieurs capteurs d'image. Ce genre de dispositif produit en temps réel des reconstructions 3D surfaciques des tissus intrabuccaux. La reconstruction peut être texturée dans le cas où un des capteurs au moins est un capteur d'image en couleurs, par exemple codées au format RGB.

Dans le cas d'une caméra intraorale ayant plusieurs capteurs passifs, la reconstruction peut être faite grâce à des algorithmes de stéréoscopie multi-vues classique. Un exemple de ce genre d'algorithmes est décrit, par exemple, dans l'article par A. Geiger, J. Ziegler and C. Stiller, "StereoScan: Dense 3d reconstruction in real-time" 2011 IEEE Intelligent Vehicles Symposium (IV), Baden-Baden, 2011, pp. 963-968.

Dans le cas d'une caméra intraorale avec un seul capteur, il est possible de se référer à l'article par R. A. Newcombe, S. J. Lovegrove et A. J. Davison, "DTAM: Dense tracking and mapping in real-time", 2011 International Conférence on Computer Vision, Barcelona, 2011, pp. 2320-2327, ou encore à l'article par D. Eigen, C. Puhrsch et R. Fergus, "Depth Map Prediction from a Single Image using a Multi-Scale Deep Network", NIPS'14, Proceedings of the 27th International Conférence on Neural Information Processing Systems - Volume 2, décembre 2014 pages 2366-2374.

Dans le cas de plusieurs capteurs avec un source de lumière structurée, la technologie dépend de cette source de lumière structurée. L'homme du métier peut se référer aux notes techniques (guides de l'utilisateur) des fabricants de ce genre de caméras (liste).

Bien que cela ne soit pas indispensable, chacun des appareils de capture d'image 61 et 62 peut avantageusement être un imageur monoculaire, c'est-à-dire ne comprenant qu'un unique capteur d'image. Un imageur monoculaire coûte en effet moins cher que les imageurs binoculaires (ou plus généralement les appareil stéréoscopiques multi-vues) adaptés pour générer des reconstructions 3D par stéréoscopie multi-vues. On verra plus loin comment des reconstructions tridimensionnelles peuvent être générées, selon des modes de mise en oeuvre, à partir d'une seule image bidimensionnelle de la scène à reconstruire. Bien entendu, l'utilisation d'imageurs binoculaire, ou stéréoscopiques multi-vues, est toutefois également possible dans le cadre de mises en oeuvre de l'invention.

L'imageur des appareils 61 et 62 est par exemple un capteur passif. Il peut s'agir d'un capteur monoculaire en technologie CMOS ou en technologie CCD. Une scène statique peut être imagée par un tel dispositif de capture d'image monoculaire, en noir et blanc ou en couleurs. Toutefois, l'homme du métier appréciera que, afin de permettre d'obtenir des reconstructions 3D texturées, chacun des appareils 61 et 62 et en tout cas au moins l'appareil local 62 fournissant les reconstructions locales plus précises, comprend au moins un capteur d'image en couleurs, par exemple au format RVB. En outre, chacun des appareils 61 et 62 peut acquérir des images 2D en mode photographie (une seule image 2D à la fois) ou en mode vidéo (plusieurs images 2D au cours du temps selon une fréquence quelconque).

Dans les modes de mise en oeuvre du procédé, l'appareil global 61 est adapté pour, et destiné à produire une reconstruction 3D globale 30 des tissus dentaires de manière plus rapide (en raison de son champ de vue élargi) mais éventuellement moins précise que l'appareil local. L'appareil local 62 peut alors être utilisé pour préciser tout ou partie de la reconstruction globale 30, en produisant une ou des reconstructions locales plus précises comme les reconstructions 41-43, qui peuvent être fusionnées dans la reconstruction globale 30, à la localisation adéquate. On décrira plus loin, dans un premier temps, des modes de mise en oeuvre de la reconstruction 3D par l'appareil global 61 qui sont envisageables afin de produire une reconstruction 3D globale. Il sera ensuite détaillé un mode de mise en oeuvre pour fusionner la reconstruction globale 30 et les reconstructions locales 41-43.

Au préalable, on poursuit la présentation des moyens constitutifs du système de prise d'empreinte optique étendue montrés à la figure 6.

Le système comprend une unité de calcul 260, par exemple un microprocesseur d'un ordinateur (« *Central Processing Unit* ») ou un groupe de processeurs par exemple au sein d'une carte graphique (GPU, mis pour « *Graphical Processing Unit* »). L'unité de calcul est configurée pour exécuter des algorithmes de traitement de données numériques codés dans du logiciel. En particulier, dans des modes de mise en oeuvre, l'unité de calcul 260 est configurée pour exécuter un premier algorithme 261 et un second algorithme 262 de reconstruction 3D, ainsi qu'un algorithme 263 de fusion de surfaces 3D, sur lesquels on reviendra plus loin.

Par ailleurs, le système comprend en outre un système 360 de stockage d'informations numériques, par exemple un disque dur en technologie SSD (de l'anglais « *solid-state drive*») ou autre. Le système de stockage 360 est adapté pour stocker de manière permanente les informations numériques définissant des réseaux de neurones convolutifs 361 et 362 (ou CNN). Ces réseaux de neurones 361 et 362 sont utilisés par les algorithmes 261 et 262, respectivement, pour générer des reconstructions 3D à partir, à chaque fois, d'au moins une image 2D. Les réseaux de neurones 361 et 362 sont entraînés à cet effet, durant des phases d'apprentissage respectives sur lesquelles on reviendra également plus loin.

L'homme du métier appréciera que le système de stockage 360 peut être physiquement inclus directement dans le système de prise d'empreinte optique, ou bien en être déporté, par exemple sur un ordinateur ou un serveur de calcul distant. Dans ce dernier cas, le système peut accéder au serveur de calcul par un réseau de communication ad-hoc, par exemple par un intranet ou par l'Internet, par exemple via un réseau Ethernet ou un réseau de radiocommunications sans fils comme un réseau 3G-LTE, 4G ou 5G, sans que cela n'affecte la mise en oeuvre du procédé.

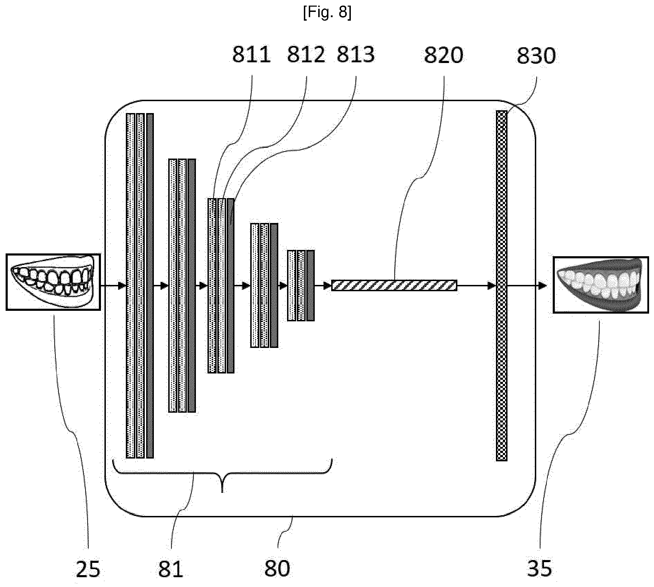

Dans un mode de réalisation illustré par la **figure 8****,** l'architecture d'apprentissage profond 361 est un réseau de neurones convolutif 80 qui peut avoir une structure tout à fait classique. Ce type de CNN est disponible dans des librairies connues par l'homme du métier qui sont en accès libre. En entrée, une image 25 en deux dimensions est fournie sous la forme d'une matrice de pixels. Elle a deux dimensions pour une image en niveaux de gris. Le cas échéant, la couleur est représentée par une troisième dimension, de profondeur 3 pour représenter les couleurs fondamentales [Rouge, Vert, Bleu].

La figure 8 montre un exemple particulier de CNN, qui est en fait un FCN (de l'anglais « *Fully Convolutional Network* ») inspiré de l'article par J. Long, E. Shelhamer et T. Darrell, "Fully convolutional networks for semantic segmentation", IEEE Conférence on Computer Vision and Pattern Recognition (CVPR), Boston, MA, 2015, pp. 3431-3440. Ce FCN comporte deux parties bien distinctes, selon une architecture encodage/décodage.

La première partie du FCN d'encodage est la partie convolutive proprement dite. Elle comprend, la « couche de traitement convolutif » 81, qui possède une succession de filtres, ou « noyaux de convolution », appliqués en strates. La couche de traitement convolutif 81 fonctionne comme un extracteur de caractéristiques des images 2D admises en entrée du CNN. Dans l'exemple, l'image d'entrée 25 est passée à travers la succession des noyaux de convolution, créant à chaque fois une nouvelle image appelée carte de convolution. Chaque noyau de convolution possède deux couches de convolution 811 et 812, et une couche 813 de réduction de la résolution de l'image par une opération de mise en commun aussi appelée opération de maximum local (« *maxpooling* », en anglais).

La sortie de la partie convolutive 81 est ensuite fournie en entrée d'une ultime couche de convolution 820 captant tout le champ d'action visuel de la couche précédente, et mimant ainsi une couche entièrement connectée (couche « *fully connected* » en anglais).

Enfin, une couche de déconvolution 830 finale produit en sortie une carte de profondeur qui, grâce à la mise en oeuvre des modes de réalisation, est une carte de profondeur à l'échelle.

On notera que l'algorithme 362 qui a pour fonction de générer les reconstructions 3D locales peut également avoir la structure du réseau de neurones convolutif 80 de la figure 8, ou toute autre structure de structure d'apprentissage profond connue.

La **figure 7** est un diagramme fonctionnel illustrant l'apprentissage d'un des réseaux de neurones convolutifs 361 et 362 qui sont utilisés par le procédé de la figure 6, pour générer la reconstruction 3D globale et les reconstructions 3D locales, respectivement.

On rappelle qu'il n'y a aucun prérequis quant au nombre de capteurs présents dans l'imageur global 61 (ni dans l'imageur local 62, d'ailleurs), ce nombre pouvant être égal à l'unité. Dit autrement, les modes de mise en oeuvre de l'invention permettent des applications dans lesquelles l'appareil global 61 du système d'acquisition d'empreinte ne comporte qu'un seul capteur uniquement.

Pour l'entraînement du réseau de neurones 631, on utilise un appareil d'acquisition d'images ou de vidéos 2D comparable à l'appareil global 61, en ce sens qu'il possède des caractéristiques intrinsèques identiques ou similaires. Cet appareil est par exemple un téléphone portable comportant un ou plusieurs capteurs passifs dont au moins un est un capteur d'image en couleurs (si on souhaite obtenir des reconstructions 3D texturées), et dont le champ de vue est suffisamment large pour inclure dans une seule image la totalité d'une arcade dentaire, même si cela implique que sa précision 2D soit moindre.

Considérant un groupe de plusieurs personnes, pour lesquelles on a obtenu au préalable une reconstruction 3D précise et texturée de l'arcade dentaire de chacune d'elles, par exemple en utilisant une caméra intraorale destinée à la reconstruction 3D de surface intraorale à partir d'images 2D passives comme décrit plus haut, avec laquelle on suite le chemin de « *tracking* » conformément au mode d'utilisation d'un tel IOS pour prendre une empreinte optique d'une arcade dentaire selon l'art antérieur. Pour chacune de ces personnes, on prend aussi des images 2D grossières de l'arcade dentaire selon différents angles de vue avec l'appareil global précité. Sur chacune de ces images sont annotés manuellement des points caractéristiques 2D. Ces mêmes points sont annotés manuellement sur la reconstruction 3D de l'arcade dentaire de la personne. Pour chaque image, il est ainsi obtenu un ensemble de correspondances point 2D / point 3D, entre les images 2D acquises par l'appareil global et la surface 3D préalablement obtenue par l'IOS.

Grâce à ces correspondances, et aux propriétés intrinsèques du capteur, la pose relative du modèle 3D par rapport à l'image 2D en question est calculée, par exemple avec l'algorithme ePNP précité. On notera que si les propriétés intrinsèques du capteur de l'appareil global ne sont pas connues, il est possible de prendre en compte des propriétés intrinsèques aléatoires, sous réserves qu'elles soient maintenues constantes tout au long du processus d'apprentissage et ensuite lors de l'utilisation du CNN en phase de prédiction, pour la prédiction de reconstructions 3D globales)

Une fois la pose estimée, on peut calculer une carte de profondeur du modèle 3D dans l'image 2D. On obtient donc, pour chaque personne, des couples {image 2D ; carte de profondeur associée} pour l'apprentissage du réseau d'apprentissage profond 361. A la figure 7, ces couples portent les références 71, 72, 73, etc. Ils sont stockés dans une base de données d'apprentissage 70.

La solution proposée pour l'apprentissage des structures d'apprentissage profond 261 et 262 est une solution d'apprentissage du réseau de neurones convolutif 80 de manière semi-supervisée. La notion de semi-supervision se réfère au fait qu'on a monté un procédé à part pour générer des données d'apprentissage : il y a donc un transfert « manuel » de données d'un algorithme à l'autre, *i.e.* du processus de génération des couples d'apprentissage stockés 71, 72, 73, etc. d'une part, processus d'apprentissage proprement dit, d'autre part. Comme l'homme du métier l'appréciera, toutefois, la génération de données d'apprentissage peut rester automatique. Par opposition, la non-supervision se réfère au fait que le réseau trouverait seul, par analyse des données d'entrée, des règles d'inférence permettant de produire des cartes de profondeur, ce qui est difficilement concevable. Et la supervision totale se réfère au fait de donner des données d'apprentissage non issues d'un processus automatique mais issues d'un processus entièrement manuel, par exemple en créant des cartes de profondeur « à la main » par mesure physique, ce qui n'est pas le cas ici non plus.

Comme montré à la figure 7, l'apprentissage semi-supervisé selon les modes de réalisation est réalisé à partir des couples d'apprentissage stockés dans la base de données d'apprentissage 70. Cet apprentissage peut être mis en oeuvre par un calculateur adapté, par exemple un processeur graphique (ou GPU, de l'anglais *« Graphical Processing Unit* ») capable de réaliser de grandes quantités de calcul.

L'apprentissage de la structure d'apprentissage profond 361 est effectué une fois pour toute, par le fabriquant du système de prise d'empreinte optique 3D Une fois entraîné, ce réseau est capable de prédire une carte de profondeur pour n'importe quelle image 2D prise par l'appareil global 61 et comportant une portion dentée. Il est alors chargé dans le système de stockage de données 360 de chaque appareil vendu, afin d'être utilisé en phase de prédiction. Il peut ensuite faire l'objet de mises à jour, le cas échéant.

L'homme du métier appréciera que la pertinence de la prédiction par le réseau d'apprentissage profond 361 ne se limite pas aux seules personnes impliquées dans la phase d'apprentissage. Elle se limite, par contre, à des images 2D comportant des portions dentées. En outre, le réseau d'apprentissage profond 361 ne peut prédire la carte de profondeur que pour la portion dentée (c'est-à-dire, plutôt, l'ensemble des tissus dentaires statiques et visibles en surface, incluant donc la gencive, les dents, et du matériel prothétique éventuel). Elle se limite aussi au type d'appareil impliqué dans l'apprentissage, à cause de ses propriétés intrinsèques. Par exemple, si l'apprentissage a été effectué sur des lunettes de réalité augmentée d'une certaine marque et d'une certaine génération (par exemple *Google Glass Entreprise^{™} Edition 2*), la prédiction ne sera valable que pour cette marque et pour cette génération de lunettes (en supposant que la variabilité des propriétés intrinsèques entre toutes ces lunettes est faible par rapport à la précision de prédiction visée), mais pas pour tous les appareils de cette marque ni pour tous les appareils de cette génération, respectivement.

En phase de prédiction, la carte de profondeur prédite peut être avantageusement convertie en un nuage de points 3D texturé, par simple projection inverse. Ce nuage de points 3D peut à son tour être traité par un algorithme de maillage triangulaire (voir par exemple l'article par Kazhdan et al "Screened Poisson surface reconstruction", ACM Transactions on Graphics (TOG), Volume 32 (3), 1er juin 2013) afin de produire un modèle triangulé texturé.

Afin de lever l'ambiguïté liée au facteur d'échelle, on peut utiliser la technique décrite dans une autre demande de brevet des mêmes inventeurs et des mêmes demandeurs, déposée le même jour devant le même office de Propriété Industrielle, et ayant pour titre « *Génération de modèles 3D à l'échelle à partir d'images 2D produites par un dispositif d'imagerie monoculaire* ». Sinon, l'homme du métier appréciera que cette ambiguïté n'est pas bloquante et peut être levée à un stade ultérieur, lors du recalage avec la reconstruction locale, ce qui sera explicité plus loin.

Dans les paragraphes précédents on a décrit comment il est possible d'obtenir des reconstructions 3D en temps réel depuis les deux types d'appareil, à savoir l'appareil global 61 et l'appareil local 62.

On se réfère de nouveau à la figure 6, cette fois pour décrire la mise en oeuvre du procédé de prise d'une empreinte optique étendue de l'arcade dentaire d'un patient. Les étapes de ce procédé sont mises en oeuvre sous la commande d'un praticien, à savoir un dentiste ou chirurgien-dentiste, et/ou de son assistant le cas échéant.

Dans un premier temps, le procédé comprend des étapes permettant au praticien d'obtenir la reconstruction 3D globale 30. Pour cela, en 160, une image 2D peu précise 20 de l'arcade dentaire du patient est capturée avec l'appareil global 61. Puis, en 161, la reconstruction 3D globale 30 est générée, à partir de l'image 20, par l'algorithme de reconstruction 261. Ces moyens de traitement de données numériques 261 sont adaptés pour générer une reconstruction tridimensionnelle globale 30, relativement grossière, de l'arcade dentaire à partir de l'image bidimensionnelle 20.

Dans l'exemple de mise en oeuvre représenté à la figure, l'algorithme 261 est exécuté par l'unité de calcul 260 du système de prise d'empreinte 3D étendue. Comme déjà exposé, cependant, ceci n'est pas obligatoire. En effet, lorsque l'appareil global 61 est un smartphone, que ce soit le smartphone du patient ou celui du praticien, l'algorithme 261 peut être exécuté par un programme d'application installé sur le smartphone, lequel est donc capable de générer lui-même la reconstruction 3D globale peu précise 30. Celle-ci est alors transmise au système, par l'un quelconque des moyens de communication qui ont déjà été présentés plus haut, afin que le praticien en dispose. L'algorithme de reconstruction 261 peut aussi être exécuté dans un serveur de calcul, comme également déjà exposé dans ce qui précède, et être transmise au système, lequel est alors apte à communiquer avec ledit serveur à cet effet. Enfin, lorsque l'appareil global 61 est par exemple une paire de lunettes de réalité augmentée, l'algorithme 261 peut être exécuté dans lesdites lunettes directement, en sorte que la reconstruction 3D globale 30 est obtenue par le praticien lui-même, dans son cabinet. Elle est ensuite rendue accessible à l'unité de calcul 260, à laquelle les lunettes de réalité augmentée peuvent être connectées, par exemple par une liaison USB (de l'anglais « *Universal Serial Bus* »), ou en Bluetooth^{™} ou par un réseau sans fil à faible portée comme un réseau Wi-Fi ou NFC (de l'anglais « *Near Field Communication* »), par exemple.

Ensuite, dans un deuxième temps, le procédé comprend l'acquisition d'une pluralité d'images 2D locales de secteurs associés respectifs de l'arcade dentaire avec l'appareil local 62. On rappelle que l'appareil local 62 a un champ de vue relativement plus restreint et une précision relativement plus élevée que l'appareil global 61. En outre, le procédé comprend la génération, par des deuxièmes moyens de traitement de données numériques qui implémentent l'algorithme de reconstruction 362, de reconstructions 3D locales respectives, relativement plus précises que la reconstruction 3D globale 30, desdits secteurs associés de l'arcade dentaire.

Dans l'exemple montré à la figure 6, trois images 2D locales 21, 22 et 23 sont acquises, en 161, 162 et 163, respectivement, à l'aide de l'appareil local 62, par exemple un IOS. Ces acquisitions sont réalisées par le praticien, dans son cabinet. Avantageusement, aucune relation particulière de proximité (et notamment de recouvrement partiel), ni d'ordre de prise, n'a besoin d'être respectée. En particulier, aucun chemin de « *tracking* » n'a besoin d'être suivi par le praticien pour réaliser cette série d'acquisitions. Dit autrement, les images 2D acquises peuvent être totalement décorrélées les unes des autres, la seule contrainte étant évidemment qu'elles soient toutes des images de la même arcade dentaire (i.e., des images prises de la bouche du même patient) que l'image 2D globale 20.

Dans un troisième temps, enfin, le praticien peut ensuite faire poser tout ou partie des reconstructions 3D locales 41, 42 et 43 qu'il a obtenues, par-dessus le canevas spatial constitué par la reconstruction 3D globale 30. Pour cela, le procédé implémente la fusion, par un algorithme de fusion 263 mis en oeuvre par des moyens de traitement de données numériques, de la reconstruction tridimensionnelle globale et des reconstructions tridimensionnelles locales en une seule et même reconstruction tridimensionnelle totale 50, qui est une reconstruction 3D précisée (*i.e.,* rendue plus précise). Dans la reconstruction précisée 50, les reconstructions 3D locales 41, 42 et 43 sont respectivement substituées à des portions de la reconstruction tridimensionnelle globale 30 qui correspondent aux secteurs associés de l'arcade dentaire du patient.

Les moyens de traitement numériques qui exécutent l'algorithme de fusion 263 sont configurés pour recaler chaque reconstruction 3D locale 41-43 sur la reconstruction 3D globale 30, *i.e.,* ramener la reconstruction locale dans le repère de la reconstruction globale. On notera que ces deux reconstructions ne diffèrent l'une de l'autre que par une transformation spatiale relative à 7 degrés de liberté, à savoir 3 degrés de liberté en rotation, 3 degrés de liberté en translation, et 1 facteur d'échelle.

Une fois chaque reconstruction 3D locale 41-43 recalée sur la reconstruction 3D globale 30, il suffit de remplacer, à l'étape 190, la portion de reconstruction globale 30 couverte par chaque reconstruction 3D locale 41, 42 et 43 afin d'en avoir une représentation 3D plus précise dans les portions de la reconstruction 3D globale 30 auxquelles les reconstructions 3D locales ont été substituées. On obtient ainsi, au final, la reconstruction 3D globale précisée 50. Cette reconstruction 50 est une empreinte optique étendue de l'arcade dentaire du patient, qui présente la meilleure précision possible, déterminée par celle de l'appareil local 62, mais qui a pu être générée plus rapidement et plus facilement, sans l'obligation pour le praticien de suivre le parcours de « *tracking ».*

On va décrire dans ce qui suit un mode de réalisation du recalage en deux étapes, où un premier recalage relativement grossier est d'abord estimé, puis est affiné par un deuxième recalage plus fin.

En ce qui concerne le recalage grossier, on suppose que les reconstructions globale et locales sont segmentées, *i.e.* que chaque point 3D de chacune de ces reconstructions peut être labellisé par une classe sémantique, en l'occurrence le type de dents (molaires, canines, incisives, etc. suivant la numérotation conventionnelle utilisée en dentisterie). Il est alors possible, pour chaque reconstruction 3D, de retrouver le centroïde de chaque classe sémantique, *i.e.* le barycentre de chaque type de dent. En mettant en correspondance à chaque fois *(i.e.,* pour chaque reconstruction 3D locale) le centroïde de chaque type de dent entre les deux reconstructions 3D, globale et locale, il est alors possible de retrouver la transformation relative. L'homme du métier peut considérer, par exemple, l'utilisation de l'algorithme de Umeyama (voir l'article par S. Umeyama, "Least-squares estimation of transformation parameters between two point patterns", Avril 1991, IEEE Transactions on Pattern Analysis and Machine Intelligence, PAMI-9 1991, Vol. 13, no 4, pp. 376-380).

Une fois le recalage grossier obtenu, on peut ensuite effectuer un recalage plus fin, par exemple par l'algorithme d'ICP (mis pour « *Iterative Closest Point »* en anglais : voir par exemple l'article par P.J. Besl et N.D. McKay, "A Method for Registration of 3-D Shapes", IEEE Transactions on Pattern Analysis and Machine Intelligence, PAMI, Los Alamitos, CA, USA, IEEE Computer Society, vol. 14, no 2, février 1992, pp. 239-256).

Pour le recalage grossier, il a été supposé qu'on sait segmenter en temps réel le modèle 3D. Dans un mode de réalisation, on peut remplacer le réseau d'apprentissage profond 361 par un réseau d'apprentissage plus évolué, qui est capable de prédire pour chaque image 2D la carte de profondeur ainsi qu'une carte de segmentation, *i.e.,* une carte 2D donnant pour chaque pixel la classe sémantique à laquelle il appartient.

Un exemple de ce genre de réseau d'apprentissage plus évolué peut être trouvé dans l'article *"*Towards unified depth and semantic prédiction from a single image", Wang et al., The IEEE Conférence on Computer Vision and Pattern Recognition (CVPR), 2015, pp. 2800-2809. Ainsi, en prédisant pour chaque image 2D la carte de segmentation correspondante, il est alors possible d'en faire la projection inverse, afin de labelliser chaque point 3D.

Il est nécessaire, pour produire un tel réseau d'apprentissage plus évolué, de disposer de données d'apprentissage. En plus des données d'apprentissage pour entraîner le réseau d'apprentissage profond 361, il faut disposer aussi, pour chaque image 2D, de cartes de segmentation associées. Cela peut se faire en annotant manuellement les images *(i.e.,* en affectant à chaque pixel la classe sémantique associée, ce qui est aisé pour l'œil humain). Ce procédé est relativement fastidieux mais il est classique dans la génération de données d'apprentissage. Il est possible de le remplacer par un procédé semi-automatisé, par exemple en labellisant manuellement un modèle 3D et en reprojetant le label dans toutes les images ayant servi à reconstruire ce modèle 3D, mais la description de ce mécanisme sortirait du cadre de la présente description.

La description technique de modes de mise en oeuvre et de modes de réalisation qui a été donnée ci-dessus a montré comment chaque type d'appareil peut produire en temps réel des reconstructions 3D texturées, quel que soit le nombre de capteurs (qui peut être réduit à l'unité) et le nombre d'images (selon que l'appareil est utilisé en mode photo ou en mode vidéo). Il a également été exposé comment ces reconstructions 3D peuvent être combinées afin de se complémenter mutuellement : la reconstruction globale, rapide à estimer mais moins précise, peut être améliorée par des reconstructions 3D locales effectuées par un appareil local tout en servant de structure d'ancrage pour la pose desdites reconstructions 3D locales.

Il va maintenant être décrit quelques cas d'utilisation pratiques, ou cas d'usage (« *use cases »* en anglais), dans lesquels une telle combinaison d'un appareil global et d'un appareil local peut se révéler avantageuse.

Dans un mode de réalisation, l'appareil global peut être confondu avec l'appareil local, *i.e.* une caméra intra orale, la différence provenant des conditions d'utilisation pour la génération de la reconstruction 3D globale et pour celle des reconstructions 3D locales, respectivement. L'utilisation en tant qu'appareil global se fait par exemple en reculant la caméra de la scène par rapport à l'utilisation en tant qu'appareil local, afin d'en avoir une vue globale (arcade dentaire entière) ou semi-globale (hémi-arcade). L'image provenant du capteur local comme un IOS à une telle distance est souvent imprécise, mais peut néanmoins se révéler exploitable pour obtenir une surface 3D grossière, servant de reconstruction 3D globale selon les modes de mises en oeuvre de l'invention.

Dans un mode de réalisation, l'appareil global 61 et l'appareil local 62 peuvent être un seul et même appareil en ce sens que, par exemple, la caméra intraorale 62 peut être conçue pour intégrer, d'une part, un ou plusieurs capteurs locaux ayant une précision élevée mais un champ étroit (imageant typiquement une zone de 3 cm x 2 cm) et, d'autre part, un ou plusieurs capteurs globaux ayant une précision relativement plus faible mais un champ relativement plus élevé (imageant typiquement une zone comprenant entre une hémi-arcade et une arcade complète). Le praticien effectue une première reconstruction 3D globale à l'aide des capteurs globaux, puis bascule sur les capteurs locaux pour affiner localement la reconstruction 3D globale avec des reconstructions 3D locales.

Dans des modes de réalisation, l'appareil global 61 peut être un téléphone portable muni d'un capteur 2D passif ou actif, de manière à s'intégrer dans une démarche de télémédecine. Le capteur d'image d'un téléphone portable est un capteur à champ large, mais qui présente une précision relativement faible eu égard aux standards de l'imagerie en dentisterie. Dans ce cas, l'image 2D peut être prise à son domicile par le patient lui-même, et cette image 2D ou une reconstruction 3D qui est générée sur la base de ladite image 2D, peut n'être obtenue qu'à un moment ultérieur par le praticien au sein de son cabinet dentaire. A l'aide de ce dispositif, un patient peut en effet lui-même, seul ou avec l'aide d'un proche, effectuer des prises d'images 2D de son arcade dentaire. Ces images 2D peuvent être converties en une reconstruction 3D globale par l'algorithme 261, comme décrit précédemment.

Lorsque l'algorithme 261 est exécuté sur le téléphone portable, par exemple par un programme d'application installé sur ledit téléphone, le patient peut alors transmettre la reconstruction 3D globale à son praticien pour avis diagnostique, esthétique, etc. Dès qu'il obtient la reconstruction 3D globale, le praticien peut formuler un premier diagnostic médical et/ou esthétique sur la base de cette reconstruction 3D globale. Le praticien n'a pas besoin d'une reconstruction 3D très précise pour cela. Il peut éventuellement proposer au patient de prendre rendez-vous au cabinet. Lors de ce rendez-vous, le praticien peut alors affiner localement la reconstruction 3D au moins pour les secteurs de l'arcade dentaire (ou des arcades dentaires) concernée(s) par le traitement envisagé, à l'aide d'un appareil local 62, par exemple un IOS.

La reconstruction 3D globale 30 peut être transmise directement au praticien dentiste ou chirurgien-dentiste, par email, ou par un réseau de transmission de données sans fil, comme un réseau de communications cellulaire 3G-LTE, 4G ou 5G. Elle peut transiter par un serveur informatique, ou serveur de calcul, dans lequel des algorithmes automatiques peuvent traiter cette reconstruction 3D globale afin d'en dériver des indicateurs variés, par exemple détection automatique de pathologies (caries, déchaussement, etc.), ou faire des propositions esthétiques (alignement automatique des dents), éditer des devis indicatifs sur des traitements prothétiques ou esthétiques, etc. Ces informations indicatives peuvent être proposées au patient, qu'il peut décider de transmettre à son praticien pour avoir son avis.

En variante, l'algorithme 261 de reconstruction 3D peut être exécuté sur un serveur informatique, sur la base de l'image 2D de l'arcade prise par le patient avec son téléphone portable. Dans ce cas, c'est l'image 2D qui est être transmise vers le praticien par email ou par réseau 3G-LTE, 4G ou 5G, via ledit serveur. Un tel serveur peut héberger une plateforme de services, mettant en relation les patients et des praticiens abonnés. Cette plateforme peut disposer de moyens de calcul configurés pour mettre en oeuvre l'algorithme de reconstruction 3D, notamment. Le praticien obtient alors la reconstruction 3D indirectement du patient, via ledit serveur de services.

Dans une autre variante, l'appareil global peut être une paire de lunettes de réalité augmentée, par exemple disponible dans le cabinet du praticien dentiste ou chirurgien-dentiste. Le capteur de ce genre de dispositif possède un champ relativement large, *i.e.,* capable de couvrir une portion étendue d'une arcade dentaire, par exemple au moins une hémi-arcade dentaire. Ainsi, lors d'une première inspection de la cavité buccale en portant ce dispositif, le praticien peut obtenir lui-même, directement et rapidement une reconstruction globale dès la première image acquise. Cette solution présente l'avantage de permettre d'intégrer l'image 2D de l'arcade dentaire automatiquement dans la chaine numérique dématérialisée (« *digital workflow* ») du praticien.

Par exemple, la reconstruction 3D globale peut être effectuée en temps réel lorsque le praticien balade son regard dans la cavité buccale à travers les lunettes de réalité augmentée.

La reconstruction 3D globale 30 peut être affichée en alpha-transparence sur les lunettes de réalité augmentée au fur et à mesure de son estimation. Grâce au procédé de reconstruction 3D décrit précédemment, cet affichage est aisé à mettre en place, étant donné que l'image 2D servant à effectuer le reconstruction 3D globale 30 est la même que celle vue par les lunettes. Une telle pose de la reconstruction 3D dans l'image 2D, connue en soi, permet au praticien de savoir à tout moment quelle(s) zone(s) de l'arcade il a reconstruit via les lunettes, afin de pouvoir si besoin la compléter en changeant d'angle de vue.

Dans un mode de réalisation, la reconstruction globale 30 reste affichée sur les lunettes de réalité augmentée, au fur et à mesure que le praticien la complète grâce à un appareil d'acquisition d'image local. Etant donné que chaque reconstruction 3D locale 41, 42, 43, etc. est recalée sur la reconstruction 3D globale 30, il est alors possible de l'afficher en alpha-transparence sur les lunettes de réalité augmentée, par-dessus la reconstruction 3D globale 30, par exemple en utilisant une couleur différente. Cela permet au praticien à tout moment de savoir quelle(s) zone(s) il a déjà précisée(s) grâce à l'appareil local.

La présente invention a été décrite et illustrée dans la présente description détaillée et dans les figures des dessins annexés, dans des formes de réalisation possibles.

Dans le présent exposé, le terme "comprendre" ou "comporter" n'exclut pas d'autres éléments ou d'autres étapes. Les signes de référence aux dessins ne sauraient être compris comme limitant la portée de l'invention.

## Revendications

1. Procédé de génération d'une reconstruction tridimensionnelle d'une arcade dentaire d'un patient, dite empreinte optique étendue, comprenant les étapes suivantes mises en oeuvre sous la commande d'un praticien :
- l'obtention d'au moins une image bidimensionnelle globale de l'arcade dentaire acquise avec un premier capteur d'image ayant un champ de vue relativement large et une précision relativement faible, et la génération par des premiers moyens de traitement de données numériques d'une reconstruction tridimensionnelle globale, relativement grossière, de l'arcade dentaire à partir de ladite image bidimensionnelle ;
- l'acquisition d'une pluralité d'images bidimensionnelles locales de secteurs associés respectifs de l'arcade dentaire avec un second capteur d'image ayant un champ de vue relativement plus restreint et une précision relativement plus élevée que le premier capteur d'images, et la génération par des deuxièmes moyens de traitement de données numériques de reconstructions tridimensionnelles locales respectives, relativement plus précises que la reconstruction tridimensionnelle globale, desdits secteurs associés de l'arcade dentaire ;
- la fusion, par un algorithme de fusion mis en oeuvre par des troisièmes moyens de traitement de données numériques, de la reconstruction tridimensionnelle globale et des reconstructions tridimensionnelles locales en une seule et même reconstruction tridimensionnelle totale dans laquelle les reconstructions tridimensionnelles locales sont respectivement substituées à des portions de la reconstruction tridimensionnelle globale qui correspondent aux secteurs associés de l'arcade dentaire, la reconstruction globale jouant un rôle de guide spatial absolu, ladite fusion comprenant un calage des reconstructions tridimensionnelles locales dans la reconstruction tridimensionnelle globale, ledit calage étant adapté pour minimiser une distance entre les nuages de points correspondant à chacun des secteurs associés de l'arcade dentaire et du nuage de points correspondants de la reconstruction tridimensionnelle globale.

2. Procédé selon la revendication 1, dans lequel le premier capteur d'image est un capteur d'image d'un appareil numérique portable du patient, comme un téléphone portable, et dans lequel l'image bidimensionnelle globale est acquise par le patient lui-même à l'aide de son appareil numérique portable et est transmise depuis ledit appareil numérique portable au praticien pour la génération de la reconstruction tridimensionnelle globale.

3. Procédé selon la revendication 1, comprenant l'acquisition de l'image bidimensionnelle globale par le praticien à l'aide du premier capteur d'image.

4. Procédé selon la revendication 3, dans lequel le premier capteur d'image est compris dans des lunettes de réalité augmentée comprenant en outre les premiers moyens de traitement numériques pour la génération de la reconstruction tridimensionnelle globale.

5. Procédé selon l'une quelconque des revendications précédentes, dans lequel le second capteur d'image est un scanner intraoral, comprenant les seconds moyens de traitement de données numériques pour la génération des reconstructions tridimensionnelles locales.

6. Procédé selon l'une quelconque des revendications 1 à 5, dans lequel la reconstruction tridimensionnelle globale et/ou les reconstructions tridimensionnelles locales sont effectuées en générant pour chacune une carte de profondeur à partir d'une seule image 2D acquise par le premier capteur ou par le second capteur d'image, respectivement, sur la base d'une architecture d'apprentissage profond préalablement entraînée à cet effet.

7. Programme informatique comprenant des instructions qui, lorsque le programme informatique est chargé dans la mémoire d'un ordinateur et est exécuté par un processeur dudit ordinateur, causent la mise en oeuvre par l'ordinateur de toutes les étapes du procédé selon l'une quelconque des revendication 1 à 6.

8. Dispositif de génération d'une reconstruction tridimensionnelle d'une arcade dentaire d'un patient, dite empreinte optique étendue, comprenant :
- un premier capteur d'image ayant un champ de vue relativement large et une précision relativement faible pour acquérir au moins une image bidimensionnelle globale de l'arcade dentaire, et des premiers moyens de traitement de données numériques pour générer une reconstruction tridimensionnelle globale, relativement grossière, de l'arcade dentaire à partir de ladite image bidimensionnelle ;
- un second capteur d'image ayant un champ de vue relativement plus restreint et une précision relativement plus élevée que le premier capteur d'images, pour acquérir une pluralité d'images bidimensionnelles locales de secteurs associés respectifs de l'arcade dentaire, et des deuxièmes moyens de traitement de données numériques pour générer des reconstructions tridimensionnelles locales respectives, relativement plus précises que la reconstruction tridimensionnelle globale, desdits secteurs associés de l'arcade dentaire ; ainsi que
- des troisièmes moyens de traitement de données numériques configurés pour mettre en oeuvre un algorithme de fusion adapté pour fusionner la reconstruction tridimensionnelle globale et des reconstructions tridimensionnelles locales en une seule et même reconstruction tridimensionnelle totale dans laquelle les reconstructions tridimensionnelles locales sont respectivement substituées à des portions de la reconstruction tridimensionnelle globale qui correspondent aux secteurs associés de l'arcade dentaire, la reconstruction globale jouant un rôle de guide spatial absolu, l'algorithme de fusion comprenant un calage des reconstructions tridimensionnelles locales dans la reconstruction tridimensionnelle globale, ledit calage étant adapté pour minimiser une distance entre les nuages de points correspondant à chacun des secteurs associés de l'arcade dentaire et le nuage de points correspondants de la reconstruction tridimensionnelle globale.

9. Dispositif selon la revendication 8, comprenant des lunettes de réalité augmentée qui comprennent le premier capteur d'image et, en outre, les premiers moyens de traitement numériques pour la génération de la reconstruction tridimensionnelle globale.

10. Dispositif selon la revendication 8 ou la revendication 9, comprenant un scanner intraoral qui comprend le second capteur d'image et, en outre, les seconds moyens de traitement de données numériques pour la génération des reconstructions tridimensionnelles locales.

11. Dispositif selon l'une quelconque des revendications 8 à 10, dans lequel les premiers moyens de traitement numériques et/ou les seconds moyens de traitement numériques sont configurés pour générer la reconstruction tridimensionnelle globale et les reconstructions tridimensionnelles locales, respectivement, en générant pour chacune une carte de profondeur à partir d'une seule image 2D acquise par le premier capteur ou par le second capteur d'image, respectivement, sur la base d'une architecture d'apprentissage profond préalablement entraînée à cet effet.

12. Appareil de prise d'empreinte optique comprenant un ordinateur qui comprend les troisièmes moyens de traitement de données numériques du dispositif selon l'une quelconque des revendications 8 à 11, ainsi que des moyens adaptés pour la mise en oeuvre du procédé selon l'une quelconque des revendications 1 à 6.

## Patentansprüche

1. Verfahren zur Erzeugung einer dreidimensionalen Rekonstruktion des Zahnbogens eines Patienten, genannt erweiterter optischer Abdruck, mit den folgenden Schritten, die unter der Kontrolle eines Praktikers durchgeführt werden:
- Gewinnung mindestens eines globalen zweidimensionalen Bildes des erfassten Zahnbogens mit einem ersten Bildsensor, der ein relativ breites Sichtfeld und eine relativ geringe Genauigkeit aufweist, und Erzeugen einer globalen, relativ groben dreidimensionalen Rekonstruktion des Zahnbogens aus dem zweidimensionalen Bild durch erste digitale Datenverarbeitungsmittel;
- Erfassen mehrerer jeweiliger lokaler zweidimensionaler Bilder von jeweiligen zugehörigen Sektoren des Zahnbogens mit einem zweiten Bildsensor, der ein relativ eingeschränkteres Sichtfeld und eine relativ höhere Präzision als der erste Bildsensor aufweist, und Erzeugen von jeweiligen lokalen dreidimensionalen Rekonstruktionen der zugehörigen Sektoren des Zahnbogens durch zweite digitale Datenverarbeitungsmittel, die relativ genauer sind als die globale dreidimensionale Rekonstruktion;
- Verschmelzen der globalen dreidimensionalen Rekonstruktion und der lokalen dreidimensionalen Rekonstruktionen zu einer einzigen dreidimensionalen Gesamtrekonstruktion durch einen Verschmelzungsalgorithmus, der von dritten digitalen Datenverarbeitungsmitteln ausgeführt wird, wobei die lokalen dreidimensionalen Rekonstruktionen jeweils durch Teile der globalen dreidimensionalen Rekonstruktion ersetzt werden, die den zugehörigen Sektoren des Zahnbogens entsprechen, wobei die globale Rekonstruktion die Rolle eines absoluten räumlichen Führers spielt, wobei das Zusammenführen eine Einstellung der lokalen dreidimensionalen Rekonstruktionen in der globalen dreidimensionalen Rekonstruktion umfasst, wobei die Einstellung angepasst ist, einen Abstand zwischen den Punktwolken, die jedem der zugehörigen Sektoren des Zahnbogens entsprechen, und der entsprechenden Punktwolke der globalen dreidimensionalen Rekonstruktion zu minimieren.

2. Verfahren nach Anspruch 1, worin der erste Bildsensor ein Bildsensor eines tragbaren digitalen Geräts des Patienten, wie z.B. eines Mobiltelefons, ist, und wobei das globale zweidimensionale Bild vom Patienten selbst unter Verwendung seines tragbaren digitalen Geräts erfasst und von dem tragbaren digitalen Gerät an den Behandler übertragen wird, um die globale dreidimensionale Rekonstruktion zu erzeugen.

3. Verfahren nach Anspruch 1, welches das Erfassen des globalen zweidimensionalen Bildes durch den Praktiker unter Verwendung des ersten Bildsensors umfasst.

4. Verfahren nach Anspruch 3, worin der erste Bildsensor in einer *Augmented-Reality-*Brille enthalten ist, die ferner die ersten digitalen Datenverarbeitungsmittel zum Erzeugen der globalen dreidimensionalen Rekonstruktion umfasst.

5. Verfahren nach einem der vorstehenden Ansprüche, worin der zweite Bildsensor ein intraoraler Scanner ist, der die zweiten digitalen Datenverarbeitungsmittel zum Erzeugen lokaler dreidimensionaler Rekonstruktionen umfasst.

6. Verfahren nach einem der Ansprüche 1 bis 5, wobei die globale dreidimensionale Rekonstruktion und/oder die lokalen dreidimensionalen Rekonstruktionen durchgeführt werden, indem jeweils eine Tiefenkarte aus einem einzelnen 2D-Bild erzeugt wird, das von dem ersten Sensor bzw. von dem zweiten Bildsensor erfasst wurde, basierend auf einer Deep-Learning-Architektur, die zuvor für diesen Zweck trainiert wurde.

7. Computerprogramm mit Anweisungen, die, wenn das Computerprogramm in den Speicher eines Computers geladen und von einem Prozessor des Computers ausgeführt wird, den Computer veranlassen, alle Schritte des Verfahrens nach einem der Ansprüche 1 bis 6 durchzuführen.

8. Vorrichtung zur Erzeugung einer dreidimensionalen Rekonstruktion des Zahnbogens eines Patienten, genannt erweiterter optischer Abdruck, welche umfasst:
- einen ersten Bildsensor mit einem relativ weiten Sichtfeld und relativ geringer Genauigkeit zur Aufnahme mindestens eines globalen zweidimensionalen Bildes des Zahnbogens und erste digitale Datenverarbeitungsmittel zum Erzeugen einer globalen, relativ groben dreidimensionalen Rekonstruktion des Zahnbogens aus dem zweidimensionalen Bild;
- einen zweiten Bildsensor, der ein relativ eingeschränkteres Sichtfeld und eine relativ höhere Präzision als der erste Bildsensor aufweist, zum Erfassen mehrerer lokaler zweidimensionaler Bildern von jeweiligen zugehörigen Sektoren des Zahnbogens, und zweite digitale Datenverarbeitungsmittel zum Erzeugen jeweiliger lokaler dreidimensionaler Rekonstruktionen der zugehörigen Sektoren des Zahnbogens, die relativ präziser als die globale dreidimensionale Rekonstruktion sind; und
- dritte digitale Datenverarbeitungsmittel, die konfiguriert sind, einen Verschmelzungsalgorithmus auszuführen, der geeignet ist, die globale dreidimensionale Rekonstruktion und die lokalen dreidimensionalen Rekonstruktionen zu einer einzigen dreidimensionalen Gesamtrekonstruktion zu verschmelzen, wobei die lokalen dreidimensionalen Rekonstruktionen jeweils durch Teile der globalen dreidimensionalen Rekonstruktion ersetzt werden, die den zugehörigen Sektoren des Zahnbogens entsprechen, wobei die globale Rekonstruktion die Rolle eines absoluten räumlichen Führers spielt, worin der Verschmelzungsalgorithmus eine Einstellung der lokalen dreidimensionalen Rekonstruktionen in der globalen dreidimensionalen Rekonstruktion umfasst, worin die Einstellung angepasst ist, einen Abstand zwischen den Punktwolken, die jedem der zugehörigen Sektoren des Zahnbogens entsprechen, und der entsprechenden Punktwolke der globalen dreidimensionalen Rekonstruktion zu minimieren.

9. Vorrichtung nach Anspruch 8, welche eine *Augmented-Reality-Brille* umfasst, die den ersten Bildsensor und darüber hinaus die ersten digitalen Datenverarbeitungsmittel zur Erzeugung der globalen dreidimensionalen Rekonstruktion umfasst.

10. Vorrichtung nach Anspruch 8 oder Anspruch 9, mit einem intraoralen Scanner, der den zweiten Bildsensor und darüber hinaus die zweiten digitalen Datenverarbeitungsmittel zur Erzeugung lokaler dreidimensionaler Rekonstruktionen umfasst.

11. Vorrichtung nach einem der Ansprüche 8 bis 10, worin die ersten digitalen Datenverarbeitungsmittel und/oder die zweiten digitalen Datenverarbeitungsmittel konfiguriert sind, die globale dreidimensionale Rekonstruktion bzw. die lokalen dreidimensionalen Rekonstruktionen zu erzeugen, indem sie für jede eine Tiefenkarte aus einem einzelnen 2D-Bild erzeugen, das von dem ersten Sensor bzw. von dem zweiten Bildsensor erfasst wurde, und zwar auf der Grundlage einer Deep-Learning-Architektur, die zuvor für diesen Zweck trainiert wurde.

12. Optisches Abdrucknahmegerät mit einem Computer, der die dritten digitalen Datenverarbeitungsmittel der Vorrichtung nach einem der Ansprüche 8 bis 11 sowie zur Durchführung des Verfahrens nach einem der Ansprüche 1 bis 6 geeignete Mittel umfasst.

## Claims

1. A method for generating a three-dimensional reconstruction of a patient's dental arch, called an extended optical impression, comprising the following steps implemented under the control of a practitioner:
- obtaining at least one global two-dimensional image of the acquired dental arch with a first image sensor having a relatively wide field of view and relatively low precision, and generating by first digital data processing means a global, relatively coarse three-dimensional reconstruction of the dental arch from said two-dimensional image;
- acquiring a plurality of respective local two-dimensional images of respective associated sectors of the dental arch with a second image sensor having a relatively more restricted field of view and a relatively higher precision than the first image sensor, and generating by second digital data processing means respective local three-dimensional reconstructions, relatively more precise than the global three-dimensional reconstruction, of said associated sectors of the dental arch;
- merging, by a merging algorithm performed by third digital data processing means, the global three-dimensional reconstruction and local three-dimensional reconstructions into a single total three-dimensional reconstruction wherein the local three-dimensional reconstructions are respectively substituted with portions of the global three-dimensional reconstruction that correspond to the associated sectors of the dental arch, the global reconstruction playing a role of absolute spatial guide, said merging comprising a setting of the local three-dimensional reconstructions in the global three-dimensional reconstruction, said setting being adapted to minimize a distance between the point clouds corresponding to each of the associated sectors of the dental arch and the corresponding point cloud of the global three-dimensional reconstruction.

2. The method according to claim 1, wherein the first image sensor is an image sensor of a portable digital apparatus of the patient, such as a mobile phone, and wherein the global two-dimensional image is acquired by the patient itself using his portable digital apparatus and is transmitted from said portable digital apparatus to the practitioner to generate the global three-dimensional reconstruction.

3. The method according to claim 1, comprising acquiring the global two-dimensional image by the practitioner using the first image sensor.

4. The method according to claim 3, wherein the first image sensor is comprised in augmented reality glasses further comprising the first digital processing means for generating the global three-dimensional reconstruction.

5. The method according to any of the preceding claims, wherein the second image sensor is an intraoral scanner, comprising the second digital data processing means for generating local three-dimensional reconstructions.

6. The method according to any one of claims 1 to 5, wherein the global three-dimensional reconstruction and/or local three-dimensional reconstructions are performed by generating, for each one, a depth map from a single 2D image acquired by the first sensor or by the second image sensor, respectively, based on a deep learning architecture trained beforehand for that purpose.

7. A computer program comprising instructions which, when the computer program is loaded into the memory of a computer and is executed by a processor of said computer, cause the computer to perform all the steps of the method according to any one of claims 1 to 6.

8. A device for generating a three-dimensional reconstruction of a patient's dental arch, called extended optical impression, comprising:
- a first image sensor having a relatively wide field of view and relatively low precision for acquiring at least one global two-dimensional image of the dental arch, and first digital data processing means for generating a global, relatively coarse three-dimensional reconstruction of the dental arch from said two-dimensional image;
- a second image sensor having a relatively more restricted field of view and a relatively higher precision than the first image sensor, for acquiring a plurality of local two-dimensional images of respective associated sectors of the dental arch, and second digital data processing means for generating respective local three-dimensional reconstructions, relatively more precise than the global three-dimensional reconstruction, of said associated sectors of the dental arch; and
- third digital data processing means configured to implement a merging algorithm adapted to merge the global three-dimensional reconstruction and local three-dimensional reconstructions into a single total three-dimensional reconstruction wherein the local three-dimensional reconstructions are respectively substituted with portions of the global three-dimensional reconstruction that correspond to the associated sectors of the dental arch, the global reconstruction playing a role of absolute spatial guide, the merging algorithm comprising a setting of the local three-dimensional reconstructions in the global three-dimensional reconstruction, said setting being adapted to minimize a distance between the point clouds corresponding to each of the associated sectors of the dental arch and the corresponding point cloud of the global three-dimensional reconstruction.

9. The device according to claim 8, comprising augmented reality glasses which comprise the first image sensor and, furthermore, the first digital processing means for generating the global three-dimensional reconstruction.

10. The device according to claim 8 or claim 9, comprising an intraoral scanner that comprises the second image sensor and, furthermore, the second digital data processing means for generating local three-dimensional reconstructions.

11. The device according to any one of claims 8 to 10, wherein the first digital processing means and/or the second digital processing means are configured to generate the global three-dimensional reconstruction and the local three-dimensional reconstructions, respectively, by generating for each one a depth map from a single 2D image acquired by the first sensor or by the second image sensor, respectively, based on a deep learning architecture previously trained for this purpose.

12. An optical impression-taking apparatus comprising a computer which comprises the third digital data processing means of the device according to any one of claims 8 to 11, as well as means suitable for implementing the method according to any one of claims 1 to 6.
